# EUROPEAN PATENT APPLICATION

(11) **EP 2 991 366 A2**
(43) Date of publication of application: **02.03.2016**
(21) Application number: 13807519.7
(22) Date of filing: 13.08.2013
(51) Int. Cl.: H04Q 11/00

(54) **OPTICAL TRANSMISSION SYSTEM, MODE COUPLER, AND OPTICAL TRANSMISSION METHOD**

(30) Priority: 26.04.2013 CN 201310150607
(71) Applicant: ZTE Corporation, Shenzhen, Guangdong 518057 (CN)
(72) Inventor: YANG, Bo, Shenzhen Guangdong 518057 (CN); ZHANG, Xifang, Shenzhen Guangdong 518057 (CN); HE, Zian, Shenzhen Guangdong 518057 (CN); FU, Zhiming, Shenzhen Guangdong 518057 (CN)
(74) Representative: Brevalex
(86) International application number: PCT/CN2013/081392
(87) International publication number: WO 2013/189333

(57) **Abstract**

Disclosed is an OLT optical transmission system, which includes: an OLT optical transceiver module configured to send downlink light to a first single-mode waveguide module and receive uplink light input by a multimode waveguide module, the first single-mode waveguide module configured to send the received downlink light to a beam splitting/combination module; the beam splitting/combination module configured to perform beam splitting on the received downlink light to obtain multiple beams of downlink light, send the multiple beams of downlink light to corresponding second single-mode waveguide modules respectively, perform beam combination on multiple beams of received uplink light to obtain one beam of uplink light and send the combined uplink light to the multimode waveguide module; the second single-mode waveguide modules configured to send the multiple beams of received downlink light to multiple corresponding ODNs and send the multiple beams of received uplink light to the beam splitting/combination module; and the multimode waveguide module configured to send the received uplink light to the OLT optical transceiver module the invention discloses a mode coupler and an optical transmission method. By the disclosure, uplink and downlink light multiplexing may be implemented, and in addition, uplink light insertion loss may be reduced.

## Description

### TECHNICAL FIELD

The disclosure relates to the technical field of optical access, and in particular to an optical transmission system, a mode coupler and an optical transmission method.

### BACKGROUND

Due to requirements of an optical fibre communication technology on rapid development, low cost and environment friendliness, a network consisting of optical fibres is gradually adopted as a core network, a metropolitan area network and an access network.

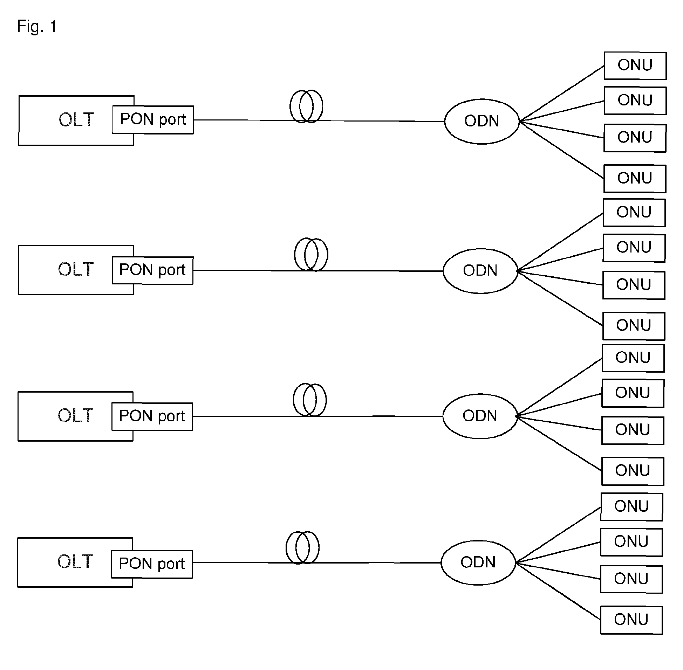

For some decentralized cells, each Optical Distribution Network (ODN) is only connected with a few Optical Network Units (ONUs); and for densely-populated cells, ONUs connected to each ODN are limited in number, so that it is necessary to provide Passive Optical Network (PON) ports corresponding to the ODNs by many Optical Line Terminals (OLTs) on a local side to meet a requirement, as shown in Fig. 1.

Due to the fact that space of a machine room of a local side is limited and there cannot be too many PON ports, an operating company pays attention to how to fully improve efficiency of a PON port and lower operation cost at present. Adoption of an ordinary splitter for combining PON ports may cause the problem of excessive uplink optical insertion loss. At present, there have existed some methods for combining PON ports by mode couplers, but in existing solutions, the mode couplers are only adopted for uplink beam combination and downlink beam combination still adopts ordinary splitters to avoid excessive downlink insertion loss, so a great number of additional Wavelength Division Multiplexing (WDM) components for uplink and downlink multiplexing are required, which increases insertion loss of the whole device, also greatly increases the size of a Programmable Logic Control (PLC) chip and corresponding cost and lower a degree of integration of the component and a probability of arrangement in a transceiver module.

### SUMMARY

In view of this, the embodiments of the disclosure are intended to provide an optical transmission system, a mode coupler and an optical transmission method, which may implement uplink and downlink optical multiplexing and simultaneously reduce uplink optical insertion loss.

To this end, the technical solutions of the embodiments of the disclosure are implemented as follows.

An embodiment of the disclosure provides an OLT optical transmission system, which includes an OLT optical transceiver module, a first single-mode waveguide module, a beam splitting/combination module, a multimode waveguide module and multiple second single-mode waveguide modules, wherein
the OLT optical transceiver module is configured to send downlink light to the first single-mode waveguide module and receive uplink light input by the multimode waveguide module;
the first single-mode waveguide module consists of single-mode waveguides, and is configured to send the downlink light sent by the OLT optical transceiver module to the beam splitting/combination module;
the beam splitting/combination module is configured to perform beam splitting on the downlink light sent by the first single-mode waveguide module to obtain multiple beams of downlink light, send the multiple beams of downlink light to the multiple second single-mode waveguide modules respectively, perform beam combination on multiple beams of uplink light sent by the multiple second single-mode waveguide modules to obtain one beam of uplink light and send the combined uplink light to the multimode waveguide module;
the multimode waveguide module consists of multimode waveguides, and is configured to send the combined uplink light sent by the beam splitting/combination module to the OLT optical transceiver module; and
each of the multiple second single-mode waveguide modules consists of single-mode waveguides, and is configured to send one beam of downlink light sent by the beam splitting/combination module to a corresponding ODN, and send one beam of uplink light sent by the corresponding ODN to the beam splitting/combination module.

In the solution, the OLT optical transceiver module may include an optical emission processing unit and an optical receiving processing unit, wherein
the optical emission processing unit is configured to send the downlink light to the first single-mode waveguide module; and
the optical receiving processing unit is configured to receive the uplink light input by the multimode waveguide module.

In the solution, the OLT optical transceiver module may further include a filtering unit, which is arranged between the optical emission processing unit and the first single-mode waveguide module and configured to filter uplink light coupled in the first single-mode waveguide module.

In the solution, the OLT optical transceiver module may further include an optical power amplification unit, which is arranged between the filtering unit and the first single-mode waveguide module and configured to perform power amplification on the downlink light.

In the solution, the filtering unit may be an optical isolator, or a WDM filter or a fibre bragg grating; and
the optical power amplification unit may be a Semiconductor Optical Amplifier (SOA) or an Erbium-doped Optical Fibre Amplifier (EDFA).

The embodiment of the disclosure further provides a mode coupler, which includes a first single-mode waveguide module, a beam splitting/combination module, a multimode waveguide module and multiple second single-mode waveguide modules, wherein
the first single-mode waveguide module consists of single-mode waveguides, and is configured to send downlink light sent by an OLT optical transceiver module to the beam splitting/combination module;
the beam splitting/combination module is configured to perform beam splitting on the downlink light sent by the first single-mode waveguide module to obtain multiple beams of downlink light, send the multiple beams of downlink light to the multiple second single-mode waveguide modules respectively, perform beam combination on multiple beams of uplink light sent by the multiple second single-mode waveguide modules to obtain one beam of uplink light and send the combined uplink light to the multimode waveguide module;
the multimode waveguide module consists of multimode waveguides, and is configured to send the combined uplink light sent by the beam splitting/combination module to the OLT optical transceiver module; and
each of the multiple second single-mode waveguide modules consists of single-mode waveguides, and is configured to send one beam of downlink light sent by the beam splitting/combination module to a corresponding ODN, and send one beam of uplink light sent by the corresponding ODN to the beam splitting/combination module.

The embodiment of the disclosure further provides an optical transmission method, which includes:
performing beam splitting on downlink light passing through single-mode waveguides to obtain multiple beams of downlink light, and sending each of the multiple beams of downlink light to an ODN through a corresponding single-mode waveguide respectively; and
receiving multiple beams of uplink light sent by multiple ODNs through corresponding single-mode waveguides respectively, performing beam combination on the multiple beams of uplink light to obtain one beam of uplink light, and sending the one beam of uplink light to multimode waveguides.

In the solution, before sending the downlink light to the single-mode waveguides, the method may further include: filtering uplink light coupled in the single-mode waveguides.

In the solution, after filtering the uplink light coupled in the single-mode waveguides, the method may further include: performing power amplification on the downlink light.

In the solution, the step of filtering the uplink light coupled in the single-mode waveguides is implemented through an optical isolator, or a WDM filter or a fibre bragg grating; and
the step of performing power amplification on the downlink light is implemented through an SOA or an EDFA.

According to the optical transmission system, mode coupler and optical transmission method provided by the embodiments of the disclosure, only one beam splitting/combination module is adopted to couple the uplink light and the downlink light, and the uplink light is coupled to the multimode waveguide module from the multiple second single-mode waveguide modules to achieve low uplink light insertion loss; and obviously, the embodiments of the disclosure may realize uplink and downlink light multiplexing and reduce the uplink light insertion loss.

### BRIEF DESCRIPTION OF THE DRAWINGS

Fig. 1 is a structure diagram of a PON according to an existing technology;
Fig. 2 is a structure diagram of an OLT optical transmission system according to an embodiment of the disclosure;
Fig. 3 is a structure diagram of a mode coupler according to an embodiment of the disclosure;
Fig. 4 is an implementation flowchart of an optical transmission method according to an embodiment of the disclosure;
Fig. 5 is a first composition diagram of a PON structure adopting an OLT optical transmission system according to an embodiment of the disclosure; and
Fig. 6 is a second composition diagram of a PON structure adopting an OLT optical transmission system according to an embodiment of the disclosure.

### DETAILED DESCRIPTION

In order to make characteristics and technical contents of the embodiments of the disclosure understood in more detail, implementation of the embodiments of the disclosure is described below with reference to the drawings in detail, and the drawings are only adopted for description as a reference and not intended to limit the embodiments of the disclosure.

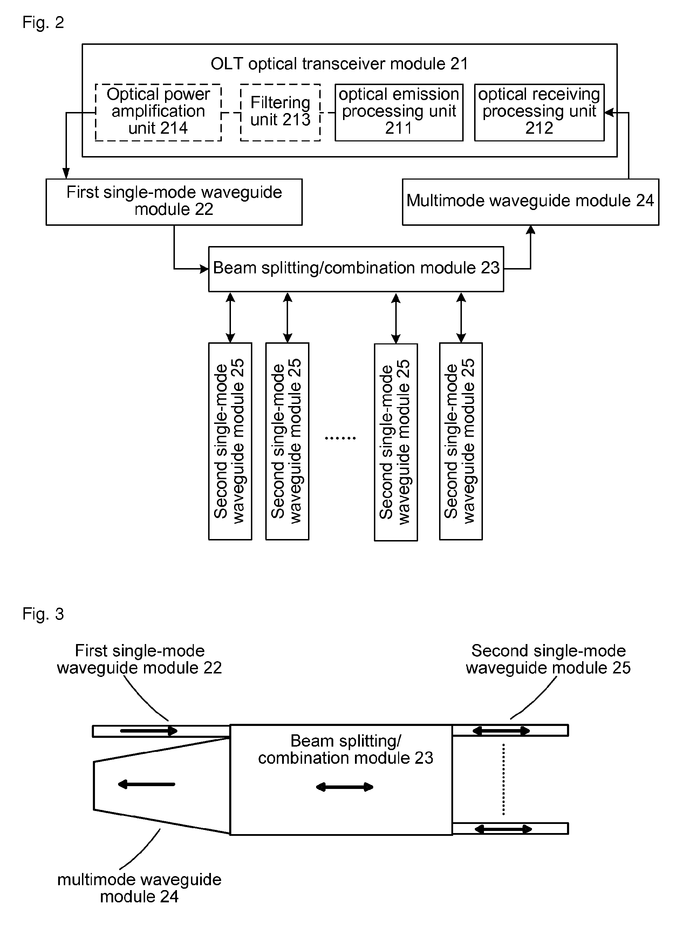

An embodiment of the disclosure provides an OLT optical transmission system, and as shown in Fig. 2, the OLT optical transmission system includes an OLT optical transceiver module 21, a first single-mode waveguide module 22, a beam splitting/combination module 23, a multimode waveguide module 24 and multiple second single-mode waveguide modules 25, each second single-mode waveguide module 25 corresponding to one ODN, wherein
the OLT optical transceiver module 21 is configured to send downlink light to the first single-mode waveguide module 22 and receive uplink light input by the multimode waveguide module 24;
the first single-mode waveguide module 22 consists of single-mode waveguides, and is configured to send the downlink light sent by the OLT optical transceiver module 21 to the beam splitting/combination module 23;
the beam splitting/combination module 23, which may be composed of a component such as a multimode interference coupler or a star coupler, is configured to receive the downlink light sent by the first single-mode waveguide module 22, perform beam splitting on the downlink light to obtain multiple beams of downlink light, and send the multiple beams of downlink light to corresponding multiple second single-mode waveguide modules 25 respectively, and is further configured to receive multiple beams of uplink light sent by the multiple second single-mode waveguide modules 25, perform beam combination on the multiple beams of uplink light to obtain one beam of uplink light and send the combined uplink light to the multimode waveguide module 24;
the multimode waveguide module 24 consists of multimode waveguides, and is configured to receive the uplink light sent by the beam splitting/combination module 23 and send the uplink light to the OLT optical transceiver module 21; and
each second single-mode waveguide module 25 consists of single-mode waveguides, is configured to receive one beam of downlink light sent by the beam splitting/combination module 23 and send the one beam of downlink light to a corresponding ODN, and is further configured to receive one beam of uplink light sent by the corresponding ODN and send the one beam of uplink light to the beam splitting/combination module 23.

Preferably, the OLT optical transceiver module 21 includes an optical emission processing unit 211 and an optical receiving processing unit 212, wherein
the optical emission processing unit 211 is configured to send the downlink light to the first single-mode waveguide module 22; and
the optical receiving processing unit 212 is configured to receive the uplink light input by the multimode waveguide module 24.

Preferably, the OLT optical transceiver module 21 further includes a filtering unit 213 and an optical power amplification unit 214, wherein
the filtering unit 213 is arranged between the optical emission processing unit 211 and the first single-mode waveguide module 22, and is configured to filter uplink light coupled in the first single-mode waveguide module 22; and
the optical power amplification unit 214 is arranged between the filtering unit 213 and the first single-mode waveguide module 22, and is configured to perform power amplification on the downlink light.

In the solution, the filtering unit 213 may adopt an optical isolator, or a WDM filter or a fibre bragg grating; and
in the solution, the optical power amplification unit 214 may adopt an SOA or an EDFA.

In a practical application, the OLT optical transceiver module in the OLT optical transmission system may be implemented by an OLT optical transceiver, the first single-mode waveguide module may be implemented by single-mode waveguides, the beam splitting/combination module may be implemented by a beam splitting component such as a multimode interference coupler or a star coupler, the multimode waveguide module may be implemented by multimode waveguides, and the second single-mode waveguide modules may be implemented by single-mode waveguides, wherein the optical emission processing unit in the OLT optical transceiver module may be implemented by an optical emitter in the optical transceiver, the optical receiving processing unit may be implemented by an optical receiver in the optical transceiver, the filtering unit may be implemented by a filter such as an optical isolator, a WDM filter or a fibre bragg grating, and the optical power amplification unit may be implemented by an optical power amplifier such as a SOA or an EDFA.

An embodiment of the disclosure further provides a mode coupler, which integrates the first single-mode waveguide module 22, the beam splitting/combination module 23, the multimode waveguide module 24 and the multiple second single-mode waveguide modules 25 in the OLT optical transmission system shown in Fig. 2;
as shown in Fig. 3, the mode coupler includes the first single-mode waveguide module 22, the beam splitting/combination module 23, the multimode waveguide module 24 and the multiple second single-mode waveguide modules 25, wherein
one end of the first single-mode waveguide module 22 is connected with the beam splitting/combination module 23;
one end of the beam splitting/combination module 23 is connected with the first single-mode waveguide module 22 and the multimode waveguide module 24, and the other end is connected with the multiple second single-mode waveguide modules 25; one end of the multimode waveguide module 24 is connected with the beam splitting/combination module, and the multimode waveguide module 24 and the first single-mode waveguide module 22 are on the same side of the beam splitting/combination module 23; and
one end of each of the multiple second single-mode waveguide modules 25 is connected with the beam splitting/combination module 23. Specifically, the first single-mode waveguide module 22 consists of single-mode waveguides, and is configured to receive downlink light sent by an OLT optical transceiver module 21 and send the downlink light to the beam splitting/combination module 23;
the beam splitting/combination module 23, which may be composed of a component such as a multimode interference coupler or a star coupler, is configured to receive the downlink light sent by the first single-mode waveguide module 22, perform beam splitting on the downlink light to obtain multiple beams of downlink light, and send the multiple beams of downlink light to the corresponding multiple second single-mode waveguide modules 25 respectively, and is further configured to receive multiple beams of uplink light sent by the multiple second single-mode waveguide modules 25, perform beam combination on the multiple beams of uplink light to obtain one beam of uplink light and send the combined uplink light to the multimode waveguide module 24;
each second single-mode waveguide module 25 consists of single-mode waveguides, and is configured to receive one beam of downlink light sent by the beam splitting/combination module 23 and send the one beam of downlink light to a corresponding ODN, and is further configured to receive one beam of uplink light sent by the corresponding ODN and send the one beam of uplink light to the beam splitting/combination module 23; and
the multimode waveguide module 24 consists of multimode waveguides, and is configured to receive the uplink light sent by the beam splitting/combination module 23 and send the uplink light to the OLT optical transceiver module 21. Based on the abovementioned structure and functions, in a practical application, downlink light is emitted from the first single-mode waveguide module 22, is split into multiple beams of downlink light through the beam splitting/combination module 23, and then is sent to the ODNs through the multiple second single-mode waveguide modules 25 respectively; and the multiple beams of uplink light are input through the multiple second single-mode waveguide modules 25 respectively, are combined into one beam of uplink light through the beam splitting/combination module 23, and then are input through the multimode waveguide module 24.

In the solution, when uplink light is transmitted, the uplink light may share the same beam splitting/combination module 23 with downlink light, and the uplink light is output from the multimode waveguide module 24 on the same side with the first single-mode waveguide module 22, so that low uplink signal insertion loss is achieved by coupling uplink light from the multiple second single-mode waveguide modules 25 to the multimode waveguide module 24.

In the practical application, the first single-mode waveguide module may be implemented by single-mode waveguides, the beam splitting/combination module may be implemented by a beam splitting component such as a multimode interference coupler or a star coupler, the multimode waveguide module may be implemented by multimode waveguides, and the second single-mode waveguide modules may be implemented by single-mode waveguides.

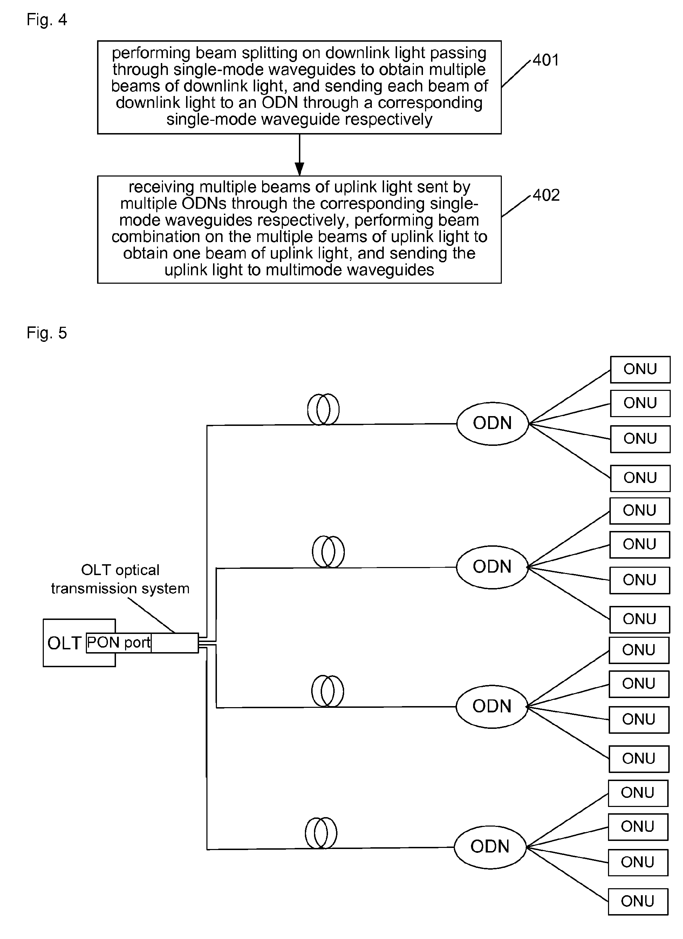

An embodiment of the disclosure discloses an optical transmission method for the OLT optical transmission system shown in Fig. 2, and as shown in Fig. 4, the method includes the following steps:
Step 401: beam splitting is performed on downlink light passing through single-mode waveguides to obtain multiple beams of downlink light, and each beam of downlink light is sent to each ODN through the corresponding single-mode waveguide respectively; and
Step 402: multiple beams of uplink light sent by multiple ODNs through the corresponding single-mode waveguides respectively are received, beam combination is performed on the multiple beams of uplink light to obtain one beam of uplink light, and the one beam of uplink light is sent to multimode waveguides.

In a practical application, Step 401 and Step 402 represent processing of the downlink light and the uplink light respectively, and are executed simultaneously, and there is no execution sequence.

In the steps, the downlink light is sent to the single-mode waveguides from an OLT optical transceiver module; and

preferably, before sending the downlink light to the single-mode waveguides, the method further includes: filtering uplink light coupled in the single-mode waveguides.

Preferably, after the step of filtering the uplink light coupled in the single-mode waveguides and before the step of sending the downlink light to the single-mode waveguides, the method further includes: performing power amplification on the downlink light.

The OLT optical transmission system may be applied to a PON structure shown in Fig. 5, the PON structure adopts the OLT optical transmission system disclosed by the embodiment of the disclosure, and as shown in Fig. 5, the OLT optical transmission system provided by the embodiment of the disclosure is adopted in an OLT on a local side, and uplink light of four ODNs may be combined at a PON port of the OLT. Of course, uplink light from any number of ONDs, not limited to four ONDs, may be combined in a practical application as long as the number of the second single-mode waveguides in the OLT optical transmission system is correspondingly changed according to the number of the ODNs to ensure that the second single-mode waveguides in the OLT optical transmission system correspond to the ODNs one to one.

With the adoption of the OLT optical transmission system provided by the embodiment of the disclosure, uplink light from multiple existing ODNs may be combined only by adding the OLT optical transmission system of the embodiment of the disclosure without making any change to an existing structure of existing OLT equipment.

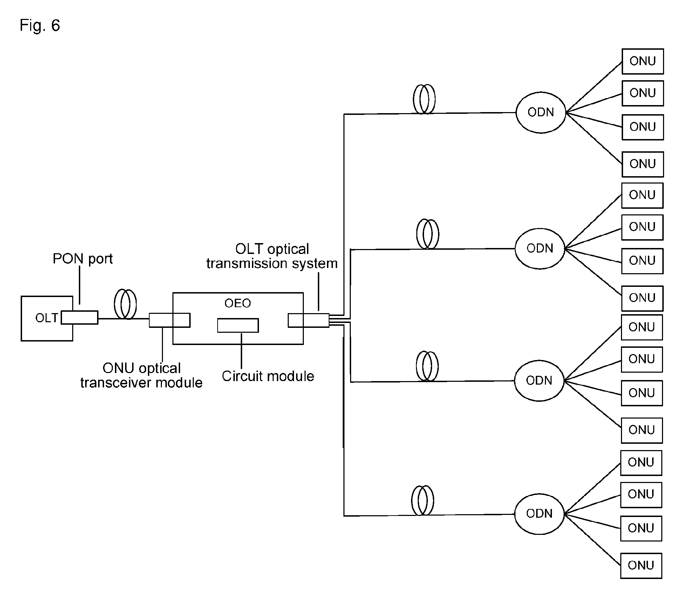

The OLT optical transmission system may further be applied to a PON structure with an Optical-Electrical-Optical (OEO) device shown in Fig. 6, the PON structure adopts the OLT optical transmission system disclosed by the embodiment of the disclosure, and as shown in Fig. 6, the OEO device includes an ONU optical transceiver module, a circuit module and the OLT optical transmission system, wherein the ONU optical transceiver module and the OLT optical transmission system are configured to perform optical-electrical and electrical-optical conversion on a downlink signal and perform electrical-optical and optical-electrical conversion on an uplink signal respectively, and the circuit module mainly realizes functions of extracting a downlink clock signal, processing the clock signal, controlling an uplink burst time sequence and the like.

When the OEO device is specifically applied, downlink light of an OLT is transmitted to the ONU optical transceiver module of the OEO device through a main single-mode optical fibre, and is received by the ONU optical transceiver module for optical-electrical conversion, then an electrical signal is subjected to electrical-optical conversion of the OLT optical transmission system, and output optical signals are uniformly distributed on multiple paths of single-mode optical fibres, enter corresponding ODNs through the main optical fibre connected with the multiple paths of single-mode optical fibres, and reach each ONU through a splitter and branch optical fibres.

While uplink light of the ONUs reaches the corresponding ODNs through respective branch optical fibres, and reaches the OLT optical transmission system for optical-electrical conversion through the main optical fibre connected with the branch optical fibres, and a converted electrical signal is coupled to the main single-mode optical fibre connected with the OLT after being subjected to electrical-optical conversion in the ONU optical transceiver module, and is transmitted to a PON port of the OLT.

According to the embodiment, uplink signals of four ODNs are combined at one OLT to implement long-distance and high-splitting-ratio transmission, and of course, the embodiment of the disclosure is not limited to the combination of the uplink signals from only four ODNs, and uplink signals from multiple ODNs may be combined as long as the number of the second single-mode waveguides in the OLT optical transmission system is correspondingly changed according to the number of the ODNs to ensure that the second single-mode waveguides in the OLT optical transmission system correspond to the ODNs one to one.

The above are only the preferred embodiments of the disclosure and not intended to limit the scope of protection of the disclosure.

## Claims

1. An Optical Line Terminal (OLT) optical transmission system, comprising an OLT optical transceiver module, a first single-mode waveguide module, a beam splitting/combination module, a multimode waveguide module and multiple second single-mode waveguide modules, wherein
the OLT optical transceiver module is configured to send downlink light to the first single-mode waveguide module and receive uplink light input by the multimode waveguide module;
the first single-mode waveguide module consists of single-mode waveguides, and is configured to send the downlink light sent by the OLT optical transceiver module to the beam splitting/combination module;
the beam splitting/combination module is configured to perform beam splitting on the downlink light sent by the first single-mode waveguide module to obtain multiple beams of downlink light, send the multiple beams of downlink light to the multiple second single-mode waveguide modules respectively, perform beam combination on multiple beams of uplink light sent by the multiple second single-mode waveguide modules to obtain one beam of uplink light and send the combined uplink light to the multimode waveguide module;
the multimode waveguide module consists of multimode waveguides, and is configured to send the combined uplink light sent by the beam splitting/combination module to the OLT optical transceiver module; and
each of the multiple second single-mode waveguide modules consists of single-mode waveguides, and is configured to send one beam of downlink light sent by the beam splitting/combination module to a corresponding Optical Distribution Network (ODN), and send one beam of uplink light sent by the corresponding ODN to the beam splitting/combination module.

2. The OLT optical transmission system according to claim 1, wherein the OLT optical transceiver module comprises an optical emission processing unit and an optical receiving processing unit, wherein
the optical emission processing unit is configured to send the downlink light to the first single-mode waveguide module; and
the optical receiving processing unit is configured to receive the uplink light input by the multimode waveguide module.

3. The OLT optical transmission system according to claim 2, wherein the OLT optical transceiver module further comprises a filtering unit which is arranged between the optical emission processing unit and the first single-mode waveguide module and is configured to filter uplink light coupled in the first single-mode waveguide module.

4. The OLT optical transmission system according to claim 3, wherein the OLT optical transceiver module further comprises an optical power amplification unit which is arranged between the filtering unit and the first single-mode waveguide module and is configured to perform power amplification on the downlink light.

5. The OLT optical transmission system according to claim 4, wherein the filtering unit is an optical isolator, or a Wavelength Division Multiplexing (WDM) filter or a fibre bragg grating; and
the optical power amplification unit is a Semiconductor Optical Amplifier (SOA) or an Erbium-doped Optical Fibre Amplifier (EDFA).

6. A mode coupler, comprising a first single-mode waveguide module, a beam splitting/combination module, a multimode waveguide module and multiple second single-mode waveguide modules, wherein
the first single-mode waveguide module consists of single-mode waveguides, and is configured to send downlink light sent by an Optical Line Terminal (OLT) optical transceiver module to the beam splitting/combination module;
the beam splitting/combination module is configured to perform beam splitting on the downlink light sent by the first single-mode waveguide module to obtain multiple beams of downlink light, send the multiple beams of downlink light to the multiple second single-mode waveguide modules respectively, perform beam combination on multiple beams of uplink light sent by the multiple second single-mode waveguide modules to obtain one beam of uplink light and send the combined uplink light to the multimode waveguide module;
the multimode waveguide module consists of multimode waveguides, and is configured to send the combined uplink light sent by the beam splitting/combination module to the OLT optical transceiver module; and
each of the multiple second single-mode waveguide modules consists of single-mode waveguides, and is configured to send one beam of downlink light sent by the beam splitting/combination module to a corresponding Optical Distribution Network (ODN), and send one beam of uplink light sent by the corresponding ODN to the beam splitting/combination module.

7. An optical transmission method, comprising:
performing beam splitting on downlink light passing through single-mode waveguides to obtain multiple beams of downlink light, and sending each of the multiple beams of downlink light to an Optical Distribution Network (ODN) through a corresponding single-mode waveguide respectively; and
receiving multiple beams of uplink light sent by multiple ODNs through corresponding single-mode waveguides respectively, performing beam combination on the multiple beams of uplink light to obtain one beam of uplink light, and sending the one beam of uplink light to multimode waveguides.

8. The optical transmission method according to claim 7, before sending the downlink light to the single-mode waveguides, the method further comprising:
filtering uplink light coupled in the single-mode waveguides.

9. The optical transmission method according to claim 8, after filtering the uplink light coupled in the single-mode waveguides, the method further comprising:
performing power amplification on the downlink light.

10. The optical transmission method according to claim 9, wherein
the step of filtering the uplink light coupled in the single-mode waveguides is implemented through an optical isolator, or a Wavelength Division Multiplexing (WDM) filter or a fibre bragg grating; and
the step of performing power amplification on the downlink light is implemented through a Semiconductor Optical Amplifier (SOA) or an Erbium-doped Optical Fibre Amplifier (EDFA).
